# EUROPÄISCHE PATENTSCHRIFT

(11) **EP 3 833 890 B1**
(45) Veröffentlichungstag und Bekanntmachung des Hinweises auf die Patenterteilung: **05.03.2025**
(21) Anmeldenummer: 19758342.0
(22) Anmeldetag: 07.08.2019
(51) Int. Cl.: F16H 25/20, F16H 25/24, E05F 17/00, E05F 15/60

(54) **SPINDELANTRIEB LAMELLENFENSTER ODER LAMELLENKLAPPE MIT EINEM SPINDELANTRIEB**
SPINDLE DRIVE AND LOUVRE WINDOW OR LOUVRE SHUTTER HAVING A SPINDLE DRIVE
ENTRAÎNEMENT DE BROCHE ET FENÊTRE À LAMELLES OU VOLET À LAMELLES COMPRENANT UN ENTRAÎNEMENT DE BROCHE

(30) Priorität: 08.08.2018 DE 202018104555 U
(43) Veröffentlichungstag der Anmeldung: 16.06.2021
(73) Patentinhaber: D+H Mechatronic AG, 22949 Ammersbek (DE)
(72) Erfinder: HAGEMANN, Ralf, 21224 Rosengarten (DE)
(74) Vertreter: Raffay & Fleck
(86) Internationale Anmeldenummer: PCT/EP2019/071188
(87) Internationale Veröffentlichungsnummer: WO 2020/030680

(56) Entgegenhaltungen:
- EP-A1- 0 552 464
- EP-A1- 3 199 742
- EP-A1- 3 199 742
- EP-B1- 0 552 464
- DE-U- 7 513 535
- DE-U1- 9 002 766
- US-A- 5 797 293
- US-A- 5 816 555

## Beschreibung

Die Erfindung betrifft einen Spindelantrieb mit den Merkmalen des Oberbegriffs des Anspruchs 1. Sie betrifft außerdem ein Lamellenfenster oder eine Lamellenklappe mit einem Spindelantrieb zum Bewegen von Lamellenelementen.

Spindelantriebe sind in ganz unterschiedlichen Anwendungen bekannt. Sie dienen allgemein dazu eine rotatorische Antriebsbewegung in eine Linearbewegung umzusetzen. Neben manuellen Spindelantrieben kommen insbesondere auch motorisch angetriebene Spindelantriebe zum Einsatz, wobei solche motorisch angetriebenen Spindelantriebe Gegenstand der vorliegenden Erfindung sind. EP 0 552 464 A1 offenbart ein Spindelhubgetriebe mit einer antreibbaren Gewindespindel und mindestens einer entlang der sich drehenden Gewindespindel wandernden Mutter mit Einrichtungen zum Befestigen der durch das Spindelhubgetriebe zu betätigenden Bauteile, wobei wenigstens ein Teil der Außenfläche der Mutter als Kugelfläche ausgebildet ist und die Mutter von einem zumindest zweiteiligen Muttergehäuse aufgenommen ist, das mit einem Teil seiner korrespondierend zur Kugelfläche der Mutter ausgebildeten Innenwandung an dieser anliegt und das Muttergehäuse die Einrichtungen zur Befestigung der Bauteile aufweist.

Ein für den Anmelder besonders im Fokus stehendes Anwendungsfeld derartiger Spindelantriebe liegt in dem Bewegen von Verschlusselementen für Fenster und/oder Klappen, insbesondere von Lamellenelementen von Lamellenfenstern oder Lamellenklappen. Für solche Bauteile, zum Beispiel in Fassaden eingesetzte Lamellenfenster, die über zwei oder mehr um jeweils parallel zueinander verlaufende Drehachsen verdrehbar in einem Rahmen angeordnete Fensterlamellen verfügen, werden regelmäßig Spindelantriebe eingesetzt, um ein Schubelement motorisch getrieben zu verschieben, welches Schubelement Teil eines Getriebes ist, an welches die Fensterlamellen gekoppelt sind, um diese entsprechend synchronisiert zu verdrehen für ein Öffnen bzw. Schließen der Fensteröffnung.

Insbesondere auch da entsprechende Lamellenfenster mit immer größeren Dimensionen gebaut werden und damit die Fensterlamellen ebenfalls großflächiger und somit mit höherem Eigengewicht gebaut werden und zugleich mehr Angriffsfläche für auflastende Windlasten bieten, sind die von den Spindelantrieben aufzubringenden Kräfte und Momente gegenüber früheren Anforderungen größer geworden. Dies führt insbesondere dann zu Problemen, wenn der über einen Antriebsmotor, eine mit dem Antriebsmotor für einen rotierenden Antrieb gekoppelte Gewindespindel und eine auf der Gewindespindel sitzende, auf dieser durch Rotationsbewegung der Gewindespindel in Längsrichtung der Gewindespindel verlagerbare Spindelmutter verfügende Spindelantrieb nicht in höchstem Maße exakt und mit engsten Toleranzen gefertigt ist. Schon kleine Toleranzabweichungen führen zu einem nicht mehr exakten Lauf, sodass beim Antrieb der Gewindespindel die darauf geführte Spindelmutter quer zu der Spindellängsachse weisende Querkräfte erfahren kann. Diese Querkräfte führen, insbesondere bei höheren Antriebsmomenten, dazu, dass die Spindelmutter verkantet, so dass es zu einer ungleichmäßigen Lastverteilung auf den Gewindeflanken kommt und die Gewinde der Spindelmutter und der Gewindespindel zum Verklemmen bzw. Verkeilen neigen. Es muss dann zusätzliche Antriebskraft aufgebracht werden, um diese Klemmkräfte zu überwinden und die Spindelmutter in Längsrichtung der Gewindespindel zu verfahren. Dadurch sinkt die Effizienz des Spindelantriebs, müssen Spindelantriebe gegebenenfalls in der Leistung höher ausgelegt werden als ohne Einrechnung eines solchen Effizienzverlustes möglicherweise erforderlich, und es ergibt sich ein erhöhter Verschleiß der beteiligten Bauteile, insbesondere der Spindelmutter und der Gewindespindel, was die Lebensdauer des Spindelantriebs insgesamt verringert.

Das oben beschriebene Problem besteht allerdings nicht nur im Zusammenhang mit Spindelantrieben für Lamellenelemente von Lamellenfenstern oder Lamellenklappen, sondern generell stets dort, wo Spindelantriebe insbesondere hohe Lasten zu bewegen haben und in der Konstruktion des Spindelantriebs Querkräfte, die an der Spindelmutter anliegen, nicht ausgeschlossen werden können.

Das oben aufgezeigte Problem zu adressieren und einen Spindelantrieb dahingehend weiterzuentwickeln, dass trotz etwa auftretender Querkräfte an der Spindelmutter diese nicht zu einem erhöhten Gewindewiderstand, einem Verkeilen oder Verklemmen der Spindelmutter auf der Gewindespindel, führen, ist Aufgabe der Erfindung. Insbesondere soll ein verbesserter Spindelantrieb angegeben werden, der diese Aufgabe löst. Weitere Überlegungen der Erfindung richten sich aber auch auf eine Verbesserung einer Spindelmutter für einen solchen Spindelantrieb und auf einen verbessertes Lamellenfenster oder eine verbesserte Lamellenklappe mit einem entsprechend verbesserten Spindelantrieb.

Die vorstehend formulierte Aufgabe wird erfindungsgemäß durch einen Spindelantrieb mit den Merkmalen des Anspruchs 1 gelöst. Vorteilhafte Weiterbildungen und Ausgestaltungen eines solchen Spindelantriebs sind in den Ansprüchen 2 bis 6 angegeben.

Ein erfindungsgemäßer Spindelantrieb, der insbesondere zum motorisch getriebenen Bewegen von Lamellenelementen von Lamellenfenstern oder Lamellenklappen konzipiert ist bzw. sein kann, weist zunächst - und dies übereinstimmend mit an sich bekannten Spindelantrieben - einen Antriebsmotor und eine von diesem rotierend antreibbare Gewindespindel auf sowie eine mit der Gewindespindel in Eingriff stehende, durch Rotation der Gewindespindel axial entlang der Gewindespindel verlagerbare Spindelmutter.

Das Besondere an dem erfindungsgemäßen Spindelantrieb ist nun die Gestaltung der Spindelmutter, die erfindungsgemäß mehrteilig, insbesondere zweiteilig, aufgebaut ist und ein Schraubmutterteil sowie ein Lagerteil aufweist. Das Schraubmutterteil weist dabei ein Innengewinde zum Angreifen an einem Außengewinde der Gewindespindel auf, wirkt also unmittelbar mit der Gewindespindel und deren Außengewinde zusammen. Das Lagerteil nimmt das Schraubmutterteil auf; das Schraubmutterteil ist in dem Lagerteil gelagert. Dabei sind an dem Lagerteil Mitnehmerstrukturen vorgesehen, über die eine von der Gewindespindel auf die Spindelmutter aufgebrachte Antriebskraft auf ein anzutreibendes Element übertragen werden können. Mit solchen Mitnehmerstrukturen, die zum Beispiel die Form einer Nut bzw. eines Eingriffs, die Form einer Bohrung, die Form eines Haltestiftes oder dergleichen aufweisen können, kann also ein eigentlich linear zu bewegendes und mittels des Spindelantriebs anzutreibendes Element mit dem Lagerteil der Spindelmutter gekoppelt werden. Weiterhin wesentlich ist, dass das Schraubmutterteil in dem Lagerteil nicht etwa starr und positionsfest festgelegt ist, sondern dass vielmehr diese beiden Teile in einem Freiheitsgrad unabhängig voneinander und relativ zueinander bewegbar sind, dass also das Schraubmutterteil in dem Lagerteil derart gelagert ist, dass es eine Relativbewegung zu dem Lagerteil mit einem Richtungsanteil der Bewegung quer zu einer Gewindelängsachse des Innengewindes ausführen kann.

Dabei ist das Schraubmutterteil in dem Lagerteil insbesondere in einer solchen Weise gelagert, dass es eine Axialbewegung entlang der Gewindespindel auf das Lagerteil im Wesentlichen spielfrei überträgt. Lediglich eine Ausgleichbewegung mit einer Bewegungskomponente in einer Querrichtung zu der Gewindelängsachse kann zwischen Schraubmutterteil und Lagerteil ausgeführt werden, sodass an dem Lagerteil anliegende Querlasten, Querkräfte bzw. -momente nicht auf das Schraubmutterteil übertragen werden und so zu einer Verkeilung oder Verklemmung des Innengewindes des Schraubmutterteils an dem Außengewinde der Gewindespindel führen, wie dies oben beschrieben ist. Vielmehr wird durch die Querkraft eine gewisse Ausweichbewegung des Lagerteils relativ zu dem Schraubmutterteil hervorgerufen, die aufgrund der relativ zueinander beweglichen Lagerung dieser beiden Teile möglich ist, wird dadurch eine solche Querkraft kompensiert und abgefangen.

Somit muss ein erfindungsgemäß gestalteter Spindelantrieb bei anliegenden Querkräften nicht mehr eine höhere Motorleistung aufbringen, um die Klemmkräfte zwischen Innengewinde des Schraubmutterteils und Außengewinde der Gewindespindel zu überwinden und die Spindelmutter zu bewegen. Durch mit der Erfindung zu erzielende geringere Reibungsverluste beim Bewegen der Spindelmutter sinkt der Energiebedarf des Spindelantriebs, wird die Effizienz des Spindelantriebs wird erhöht. Es kann somit für eine vorgesehene Anwendung nach Möglichkeit ein in den Leistungsdaten kleiner ausgelegter Spindelantrieb bzw. Antriebsmotor verwendet werden. Es können auch Netzteile eingesetzt werden, die die Netzspannung auf eine Schutzkleinspannung des Motors heruntertransformieren. Diese können in der Regel im Antrieb integriert oder außerhalb des Antriebs montiert werden. Sie sind dabei kleiner und erlauben eine insgesamt kostengünstigere Konstruktion und Gestaltung. Auch die benötigten Stromversorgungskabel und elektronischen / elektromechanischen Komponenten sowie Netzersatzanlagen können kleiner dimensioniert und mithin kostengünstiger bereitgestellt werden. Auch wird der Verschleiß, insbesondere des Innengewindes der Spindelmutter (hier des Schraubmutterteils) und des Außengewindes der Gewindespindel, reduziert, wird die Lebensdauer und Haltbarkeit des so konstruierten Spindelantriebs verlängert.

Die Relativbewegung zwischen Lagerteil und Schraubmutterteil kann, wie in einem Ausführungsbeispiel vorgesehen, dadurch erhalten werden, dass das Schraubmutterteil eine auf einer Außenseite des Schraubmutterteils ausgebildete Lagerfläche aufweist, die wenigstens in einem Abschnitt kugel- oder zylinderabschnittförmig gebildet ist. Weiterhin ist bei dieser Ausgestaltungsvariante das Schraubmutterteil in einer in dem Lagerteil ausgebildeten Aufnahme gelagert und weist diese Aufnahme eine Aufnahmefläche auf, die in wenigstens einem Abschnitt korrespondierend zu dem kugel- oder zylinderabschnittförmig gebildeten Abschnitt der Lagerfläche kugel- oder zylinderabschnittförmig gebildet ist. Dabei ist die jeweilige Gestaltung der Flächen, Lagerfläche und Aufnahmefläche so konzipiert, dass die jeweiligen kugel- oder zylinderabschnittförmig gebildeten Abschnitte von Lagerfläche und Aufnahmefläche ein Gelenk bilden. Auf diese Weise kann eine im Wesentlichen einer Rotation folgende Relativ- und Ausweichbewegung zwischen Lagerteil und Schraubmutterteil erfolgen, wenn Querlasten auftreten.

Bei der vorstehen beschriebenen Ausgestaltungsvariante kann insbesondere vorgesehen sein, dass der kugel- oder zylinderabschnittförmig gebildete Abschnitt der Lagerfläche an wenigstens einer in Gewindelängsrichtung gesehen axialen Stirnfläche des Schraubmutterteils ausgebildet ist in einem Bereich, der in Richtung der Gewindelängsrichtung axial jenseits des Innengewindes, vor oder hinter dem Innengewinde gelegen ist. Auf diese Weise wird erreicht, dass Lasten des Schraubmutterteils auf das Lagerteil (über den korrespondierenden Abschnitt der Aufnahmefläche, der dann ebenfalls eine stirnseitige Lage aufweist) vollständig als Drucklasten und nicht als Zuglasten eingeleitet werden. Dies führt zu einer verbesserte Festigkeit, als wenn diese Lasten ganz oder auch nur teilweise als Zuglasten übertragen werden würden. Gerade bei Stoßbelastungen hat dies Vorteile und äußert sich z.B. bei einer Verwendung des Spindelantriebs in einem Lamellenfenster oder einer Lamellenklappe auch in einem verbesserten Einbruchschutz, da die mit dem Antrieb verbundenen Lamellen nicht so einfach aufgehebelt werden können. Weiterhin ist der Bauraum, der für die Lastübertragung von dem Schraubmutterteil auf das Lagerteil erforderlich ist, in Richtung der Gewindelängsachse, also typischerweise in einer Längsrichtung des Spindelantriebs bzw. seines Gehäuses gelegen, was eine schmale Ausführung des Spindelantriebs erlaubt. Dies hat insbesondere für die Verwendung des Spindelantriebs in einem verdeckten Einbau Vorteile. Insbesondere kann an beiden entlang der Gewindelängsachse einander gegenüberliegenden Stirnseiten des Schraubmutterteils ein jeweiliger kugel- oder zylinderabschnittförmig gebildeter Abschnitt für die Lastübertragung außerhalb der Überdeckung des Innengewindes (in axialer Richtung der Gewindelängsachse davor und dahinter) gebildet sein, so dass in beiden Verfahrrichtungen der Spindelmutter eine Druckübertragung der aufzubringenden Lasten stattfinden kann.

In einer weiteren Gestaltungsvariante kann mit Vorteil vorgesehen sein, dass in dem Lagerteil axiale Anschläge für das Schraubmutterteil vorgesehen sind. Solche axialen Anschläge dienen dabei insbesondere einer weitgehend spielfreien Festlegung der Position des Schraubmutterteils relativ zu dem Lagerteil in einer Richtung parallel zu der Gewindelängsachse des Schraubmutterteils. So wird erreicht, dass der durch das Zusammenwirken von Gewindespindel und Schraubmutterteil erhaltene Linearantrieb direkt und weitgehend spielfrei auf das Lagerteil und über das Lagerteil auf ein von dem Spindelantrieb zu bewegendes Element übertragen wird.

Mit Vorteil wird mit einer Verdrehsicherung dafür Sorge getragen werden, dass das Schraubmutterteil nicht relativ zu dem Lagerteil um die Gewindelängsachse des in dem Schraubmutterteil ausgebildeten Innengewindes verdreht werden kann. So wird dafür gesorgt, dass eine Rotation der Gewindespindel sicher auch zu einer Längsverlagerung der Spindelmutter führt. Eine solche Verdrehsicherung kann auf ganz unterschiedliche Arten gebildet sein. Insbesondere wird sie durch eine nicht rotationssymmetrische Querschnittsform des Schraubmutterteils in wenigstens einer senkrecht zu der Gewindelängsachse des in dem Schraubmutterteil ausgebildeten Innengewindes verlaufenden Schnittebene und eine korrespondierende Gegenform in dem Lagerteil erreicht, wobei die Verdrehsicherung auch so ausgebildet ist, dass sie die gewollte Ausgleich- bzw. Ausweichbewegung zwischen dem Schraubmutterteil und dem Lagerteil (eine Bewegung, die im Wesentlichen einer Kippung bzw. Rotation um eine quer zu der Gewindelängsachse verlaufende Achse folgt) nicht behindert. Dies kann z.B. bei einem ansonsten in ihrer Längsrichtung (also der Erstreckungsrichtung der Gewindelängsachse) zylindermantelförmig gebildeten Schraubmutterteil durch wenigstens einen, insbesondere zwei einander quer zu der Gewindelängsachse gegenüberliegende, Vorsprung bzw. Vorsprünge erreicht werden, die eine teilzylinderförmige oder kugelabschnittförmige Oberfläche und an zwei in Umfangsrichtung des Schraubmutterteils gelegenen Stirnflächen, insbesondere eben gebildete, Anschlagsflächen ausbildet und die mit entsprechenden z.B. als eine Vertiefung bzw. als Vertiefungen in dem Lagerteil ausgebildeten Gegenstrukturen zusammenwirken. Diese Gegenstrukturen weisen dann insbesondere ihrerseits auch Anschläge auf, die mit den Anschlagsflächen zusammenwirken, um eine relative Verdrehung des Schraubmutterteils zu dem Lagerteil um die Gewindelängsachse zu verhindern. Die Vertiefungen sind dabei z.B. rechteckig geformt, so dass sie ein ausreichendes Spiel bieten, um die oben beschriebene Ausweich- bzw. Ausgleichbewegung zu erlauben.

Der erfindungsgemäße Spindelantrieb weist ein gemeinsames Antriebsgehäuse auf, in dem der Antriebsmotor, die Gewindespindel und die Spindelmutter angeordnet sind. Das Antriebsgehäuse weist zu diesem Zweck eine in einer Längsrichtung langgestreckte Form auf, wobei die Gewindespindel dann in Längsrichtung des Antriebsgehäuses verlaufend angeordnet ist. Erfindungsgemäß sind in dem Antriebsgehäuse Führungsstrukturen ausgebildet, insbesondere als Führungsflächen, die mit korrespondierenden Gegenstrukturen an dem Lagerteil der Spindelmutter zusammenwirken, um die Spindelmutter in der Längsrichtung des Antriebsgehäuses zu führen. Durch eine solche Führung wird eine zusätzliche Stabilität und eine verbesserte Funktionalität des erfindungsgemäßen Spindelantriebs erhalten.

Ein weiterer Aspekt der Erfindung in einem Lamellenfenster oder einer Lamellenklappe zu sehen, welches bzw. welche in einer üblichen Weise in einem gemeinsamen Rahmen um parallele Drehachsen verdrehbar angeordnete Lamellenelemente und ein Antriebsgetriebe aufweist, welches Antriebsgetriebe ein mit den Lamellenelementen zur Umsetzung einer Längsbewegung in Drehbewegungen der Lamellenelemente um deren Drehachsen verbundenes Schubelement aufweist. Das erfindungsgemäße Lamellenfenster bzw. die erfindungsgemäße Lamellenklappe zeichnet sich dadurch aus, dass es bzw. sie einen Spindelantrieb der vorstehend beschriebenen Art aufweist, der zum Antreiben des Schubelements mit dem Schubelement gekoppelt ist.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine dreidimensionale Ansicht eines Ausführungsbeispiels eines erfindungsgemäßen Spindelantriebs;
- Fig. 2: eine Längsschnittansicht des in Fig. 1 gezeigten Spindelantriebs;
- Fig. 3: eine vergrößerte Darstellung eines Ausschnitts aus Fig. 2, die die Gewindespindel und die darauf sitzenden Spindelmutter genauer erkennen lässt;
- Fig. 4: eine teilweise weggeschnittene dreidimensionale Ansicht des in Fig. 3 gezeigten Abschnitts des Spindelantriebs;
- Fig. 5: eine vergrößerte Schnittdarstellung der auf der Gewindespindel sitzenden Spindelmutter;
- Fig. 6: eine Ansicht der Spindelmutter mit teilweise weggeschnittenem Lagerteil zur Veranschaulichung einer Verdrehsicherung; und
- Fig. 7: eine Schnittdarstellung der Spindelmutter entlang einer senkrecht zu der in der Darstellung der Fig. 5 gewählten Schnittebene gelegenen Schnittebene.

In den Figuren ist ein mögliches Ausführungsbeispiel für einen erfindungsgemäßen Spindelantrieb gezeigt, der insbesondere eine erfindungsgemäße Spindelmutter enthält und der in erfindungsgemäßer Weise in einem Lamellenfenster oder einer Lamellenklappe für den Antrieb der Bewegung der Lamellenelemente (Fensterlamellen oder Klappenlamellen) verwendet werden kann. Die Figuren sind dabei nicht als vollständige Konstruktionszeichnungen und insgesamt maßstabsgerecht aufzufassen. Sie stellen vielmehr Prinzipskizzen dar, die jedoch in denjenigen Aspekten, die die erfindungsgemäß wesentlichen Elemente zeigen, eine detailliertere Darstellung abbilden.

In den Figuren ist ein erfindungsgemäßer Spindelantrieb in der dort gezeigten Ausgestaltungsvariante mit der Bezugsziffer 1 bezeichnet. Der Spindelantrieb 1 weist ein langgestrecktes, rohrförmiges, im Querschnitt rechteckiges Antriebsgehäuse 2 auf, in dem die für den Betrieb und die Funktion des Spindelantriebs 1 wesentlichen Elemente angeordnet sind. Diese wesentlichen Elemente sind im Kern ein Antriebsmotor 3, eine mit dem Antriebsmotor 3 zum rotierenden Antrieb derselben, gegebenenfalls über ein zwischengeschaltetes Getriebe, verbundene Gewindespindel 4 und eine mit einem darin ausgebildeten Innengewinde auf einem Außengewinde der Gewindespindel 4 geführt laufende Spindelmutter 5. In diesem allgemeinen Aufbau entspricht der erfindungsgemäße Spindelantrieb 1 dem grundsätzlichen Aufbau üblicher und bekannter Spindelantriebe, wie sie in vielen Anwendungsgebieten eingesetzt werden, um einen motorisch erzeugten Drehantrieb in eine Linearbewegung umzusetzen.

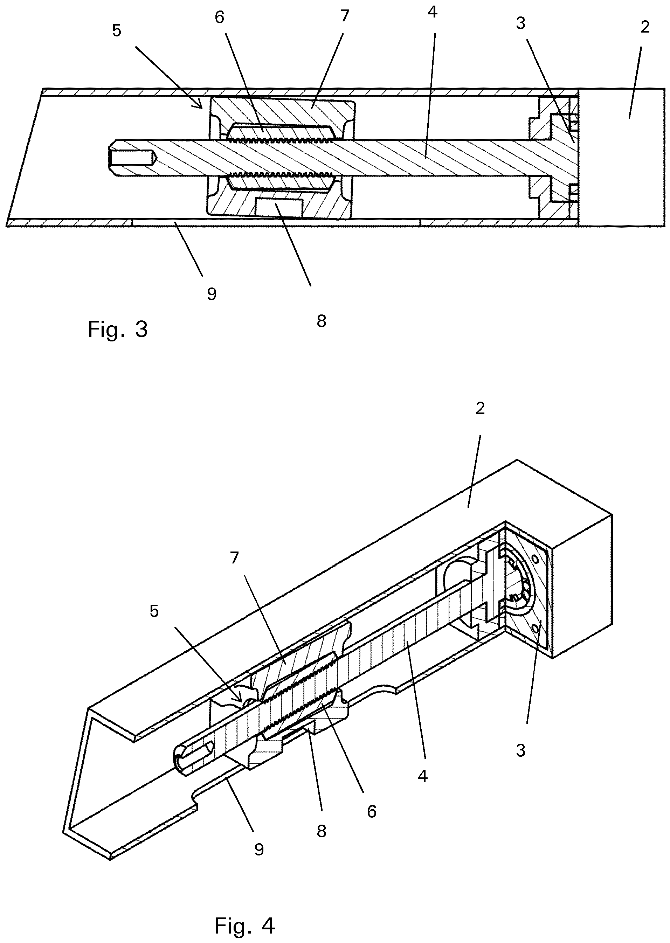

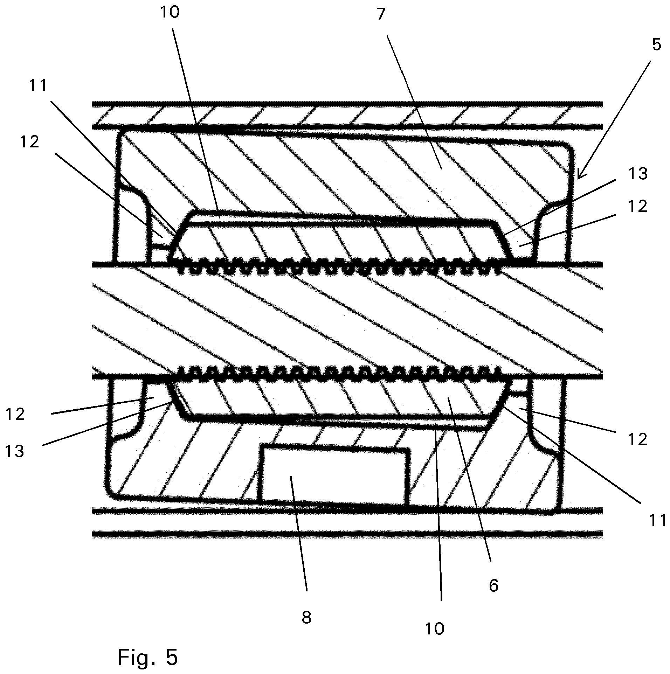

Das Besondere an dem erfindungsgemäßen Spindelantrieb 1 ist die Gestaltung der Spindelmutter 5. Diese ist, wie die Figuren 3 bis 7 erkennen lassen, wie insbesondere in den vergrößerten Darstellungen gemäß Figuren 5 bis 7 gezeigt ist, zweiteilig aufgebaut mit einem Schraubmutterteil 6 und einem Lagerteil 7, in dem das Schraubmutterteil 6 gelagert ist. Das Schraubmutterteil 6 weist das eigentliche Innengewinde zum Zusammenwirken mit dem Außengewinde der Gewindespindel 4 auf (in den Figuren 3 bis 5 ist jeweils nur derjenige Abschnitt der Gewindespindel 4, auf dem das Schraubmutterteil 6 sitzt, mit dem Außengewinde gezeichnet, das Außengewinde erstreckt sich aber auch darüber hinaus und über im Wesentlichen die gesamte Länge der Gewindespindel 4).

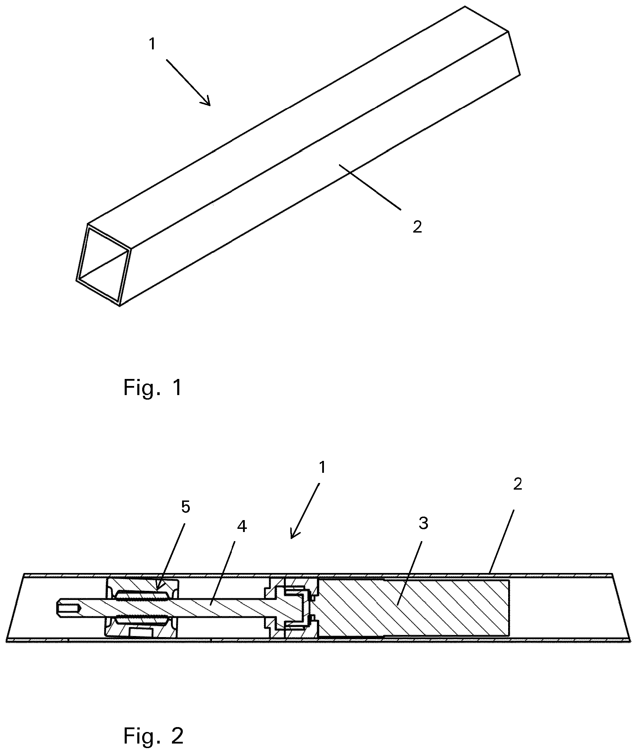

Das Lagerteil 7 hat eine Anschlussmöglichkeit zum Verbinden mit einem von der Spindelmutter 5 mitzunehmenden und linear zu bewegenden Element. Hier ist diese Anschlussmöglichkeit durch einen Einschnitt 8 in dem Lagerteil 7 gebildet, in den ein an einem zu bewegenden Element ausgebildeter nockenartiger Rastvorsprung eingeführt und dort für eine Mitnahme in einer Längsrichtung formschlüssig gehalten werden kann. Das Lagerteil 7 ist dabei so gebildet, dass es einen dem Innenquerschnitt des Antriebsgehäuses 7 in etwa entsprechenden Außenquerschnitt aufweist, sodass das Lagerteil 7 durch das Antriebsgehäuse 2 eine Führung erfährt. Erkennbar ist in den Figuren 2 bis 4 insbesondere auch, dass das Antriebsgehäuse 2 in einem Abschnitt einen sich in Längsrichtung des Antriebsgehäuses 2 erstreckenden Schlitz 9 aufweist, durch den hindurch der zuvor beschriebene Anschluss eines zu bewegenden Elements geführt und in dem Einschnitt 8 in dem Lagerteil 7 festgelegt werden kann. Über die Länge des Schlitzes 9 kann dann eine Mitnahme des so mit dem Lagerteil 7 der Spindelmutter 5 verbundenen zu bewegenden Elements, getrieben durch den Spindelantrieb 1, erfolgen.

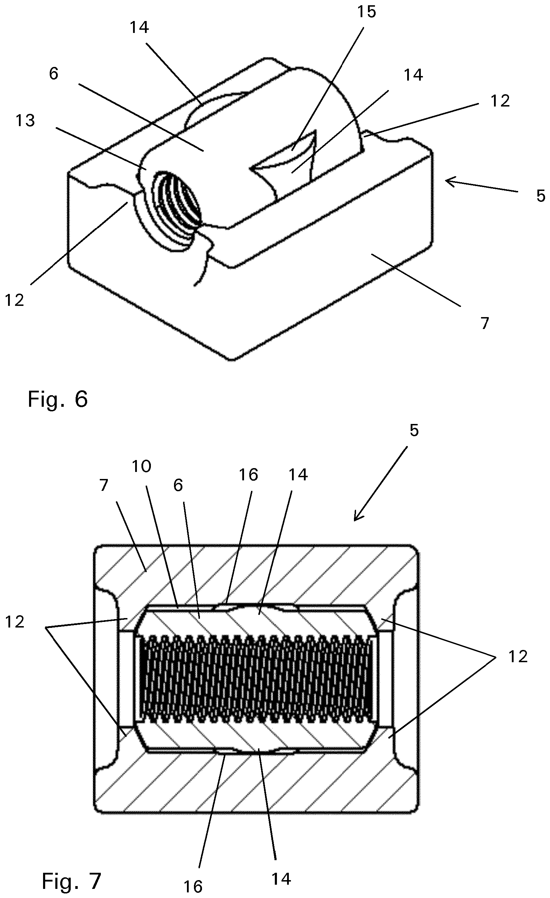

Wie insbesondere die Figur 5 erkennen lässt, sich aber auch aus den Figuren 6 und 7 ersehen lässt, ist in dem Lagerteil 7 eine Aufnahme 10 ausgebildet, in der das Schraubmutterteil 6 aufgenommen ist. Diese Aufnahme 10 hat insbesondere vor- und rückwärtige Führungsflächen 11, die auf einer der Aufnahme 10 zu weisenden Innenseite eines jeweiligen Vorsprungs 12 geformt sind. Die Vorsprünge 12 erstrecken sich dabei in einer Richtung quer zu einer Längsachse der Gewindespindel 4. Die Führungsflächen 11 sind dabei in diesem Ausführungsbeispiel kugelabschnittförmig geformt. Sie können allerdings auch eine andere Form aufweisen, zum Beispiel zylinderabschnittförmig, solange die Form dieser Flächen eine wie nachfolgend geschilderte Bewegungsmöglichkeit gestattet. Das in der Aufnahme 10 aufgenommene Schraubmutterteil 6 liegt mit Stirnflächen 13 an den Führungsflächen 11 der Aufnahme 10 an, wobei die Stirnflächen 13 eine korrespondierende Formgebung zu den an den zu der Aufnahme weisenden Innenabschnitten der Vorsprünge 12 gebildeten Führungsflächen 11 geformt sind, in diesem Ausführungsbeispiel also kugelabschnittförmig gebildet sind, aber z.B. auch zylinderabschnittförmig gebildet sein können, wenn die Führungsflächen 11 eine solche Form aufweisen, oder eben eine andere zu den Führungsflächen 11 korrespondierende Form annehmen können. Die Führungsflächen 11 sind an dem Schraubmutterteil 6 in Richtung einer Gewindelängsachse seines Innengewindes an einem vorderen und hinteren Stirnende ausgebildet und liegen in dieser axialen Richtung vor bzw. hinter dem Abschnitt des Schraubmutterteils 6, in dem das Innengewinde gebildet ist. Dadurch kann eine Übertragung von Lasten von dem Schraubmutterteil 6 auf das Lagerteil 7 (über die Stirnflächen 13) in beiden axialen Bewegungsrichtungen der Spindelmutter auf Druck und nicht auf Zug erfolgen.

Zu erkennen ist auch noch, dass das Lagerteil 7 mit dem in der Aufnahme 10 aufgenommenen Schraubmutterteil 6 ein gewisses Spiel in einer Richtung quer zu der Längsachse der Gewindespindel 4 bzw. quer zu der Gewindelängsachse des Innengewindes im Schraubmutterteil 6 hat. Dieses Spiel und die wie vorstehend beschriebene korrespondierende Ausbildung der entsprechend kugel- (oder zylinder-)abschnittförmig oder vergleichbar als Gelenkflächen gebildeten Führungsflächen 11 und Stirnflächen 13 führt zu einer Ausbildung eines Gelenks, nach Art eines Drehgelenks, um welches die nicht fest miteinander verbundenen Elemente Schraubmutterteil 6 und Lagerteil 7 relativ zueinander bewegbar sind und entsprechend in einer Richtung quer zur Gewindelängsachse des Innengewindes im Schraubmutterteil 6 bewegt, insbesondere um eine Achse quer zu der Gewindelängsachse verkippt oder verdreht, werden können. In der Figur 5 ist eine entsprechende Verkippung dargestellt, um diese Bewegungsfreiheit zu veranschaulichen. Auf diese Weise kann ein über das zu bewegende Element auf den Einschnitt 8 in dem Lagerteil 7 der Spindelmutter 5 übertragenes Quermoment, bzw. eine Querlast (also eine Kraft, die in einer Richtung quer zur Gewindelängsachse des Innengewindes des Schraubmutterteil 6 wirkt, abgefangen werden, indem eine Ausgleichsbewegung relativ zwischen dem Lagerteil 7 und dem Schraubmutterteil 6 hervorgerufen wird. So wird vermieden, dass eine entsprechende Querlast bzw. ein Quermoment zu einer Verkeilung und Verklemmung der beteiligten Gewinde, nämlich des Innengewindes des Schraubmutterteils 6 und des Außengewindes der Gewindespindel 4 führt, die eine Klemmkraft hervorrufen würde, die von dem Antriebsmotor 3 zusätzlich überwinden werden müsste, die so zu einer höheren Leistungsaufnahme des Antriebsmotors, einer geringeren Effizienz, führen würde und die zugleich einen Verschleiß von Innengewinde in dem Schraubmutterteil 6 und Außengewinde der Gewindespindel 4 bedingen würde.

Zugleich verhindern die Vorsprünge 12 eine Relativbewegung zwischen dem Lagerteil 7 und dem Schraubmutterteil 6 in einer Richtung parallel zu der Gewindelängsachse des Innengewindes im Schraubmutterteil 6 (und somit in Richtung der Längserstreckung der Gewindespindel 4), bzw. schränken eine solche Bewegungsmöglichkeit auf ein minimal tolerierbares Maß ein. So wird gewährleistet, dass der Spindelantrieb 1 ein linear zu bewegendes Element ohne, jedenfalls ohne relevantes, Längsspiel, also direkt angesteuert, bewegen kann.

In den Figuren 6 und 7 ist weiterhin zu erkennen, dass die Spindelmutter 5 eine Verdrehsicherung aufweist, mit der ein Verdrehen des Schraubmutterteils 6 relativ zu dem Lagerteil 7 um die Gewindelängsachse des Innengewindes des Schraubmutterteils 6 verhindert wird. Diese Verdrehsicherung ist hier gebildet durch an dem Schraubmutterteil 6 ausgebildete seitliche Vorsprünge 14, die sich ihrer Länge nach entlang eines Teilabschnitts des Schraubmutterteils 6 entlang einer Umfangsrichtung der ansonsten in diesem Abschnitt zylindermantelförmig gebildeten Außenfläche des Schraubmutterteils 6 und einer Breite nach in der Längsrichtung des Schraubmutterteils 6, also parallel zu der Gewindelängsachse des Innengewindes, erstrecken. Diese Vorsprünge 14 sitzen in diesem Ausführungsbeispiel etwa mittig der Längserstreckung des Schraubmutterteils 6. Die Vorsprünge 14 sind jedenfalls entlang ihrer Breite mit einer konvex gekrümmten Kontur gebildet. Diese kann insbesondere zylinderabschnittförmig sein. Die Vorsprünge 14 können aber auch in ihrer Längsrichtung eine - dann ebenfalls konvexe - Krümmung aufweisen. Sie können insoweit insbesondere auch kugelabschnittförmig gebildet sein. Wesentlich ist, dass die Vorsprünge 14 an einander gegenüberliegenden Längsenden ihrer Längenerstreckung jeweils Anschlagflächen 15 ausbilden.

Die Vorsprünge 14 sind im montierten Zustand der Spindelmutter 5 in Vertiefungen 16 aufgenommen, die in dem Lagerteil 7 ausgebildet sind. Diese Vertiefungen 16 haben hier einen im Wesentlichen rechteckigen Querschnitt und erstrecken sich ebenfalls mit einer Längenerstreckung in Umfangsrichtung der Aufnahme 10. Die Vertiefungen 16 haben an ihren in Richtung der Längenerstreckung gesehenen Enden ebenfalls (hier nicht näher dargestellte) Anschlagflächen, die, wenn das Schraubmutterteil 6 in das Lagerteil 7 eingesetzt ist, mit den Anschlagflächen 15 zusammenwirken, um eine Verdrehung des Schraubmutterteils 6 relativ zu dem Lagerteil 7, vorzugsweise im Wesentlichen spielfrei, zu verhindern. Wie Fig. 7 erkennen lässt, sind die Vertiefungen 16 jedoch in der Breitenerstreckung breiter ausgelegt, als die Vorsprünge 14. Dadurch und durch die in dieser Richtung konvex gekrümmte Form der Vorsprünge 14 kann eine Ausweichbewegung des Schraubmutterteils 6 relativ zu dem Lagerteil 7 weiterhin erfolgen, ohne dass es dabei aber zu einem Mitdrehen des Schraubmutterteils 6 mit der Gewindespindel 4, also eine relative Rotation des Schraubmutterteils 6 zu dem Lagerteil 7 kommt. Dies wird durch die korrespondierenden Anschlagflächen verhindert.

Durch die besondere Ausgestaltung der Spindelmutter 5 wird hier also gewährleistet, dass der Spindelantrieb 1 auch dann, wenn entsprechende Querkräfte bzw. Querlasten auf die Spindelmutter 5 wirken (sei dies durch gewisse toleranzbedingte Fertigungsabweichungen oder sei dies durch besonders hohe einwirkende Lasten), die Leichtgängigkeit der Spindelmutter 5 auf der Gewindespindel 4 nicht verliert und die Leistung des Antriebsmotor 3 optimal für die Verstellbewegung ausgenutzt werden kann. Zugleich ist sichergestellt, dass sich das Schraubmutterteil 6 nicht in dem Lagerteil 7 um die Gewindelängsachse seines Innengewindes relativ zu dem Lagerteil verdrehen kann.

### Bezugszeichenliste

- 1: Spindelantrieb
- 2: Antriebsgehäuse
- 3: Antriebsmotor
- 4: Gewindespindel
- 5: Spindelmutter
- 6: Schraubmutterteil
- 7: Lagerteil
- 8: Einschnitt
- 9: Schlitz
- 10: Aufnahme
- 11: Führungsfläche
- 12: Vorsprung
- 13: Stirnfläche
- 14: Vorsprung
- 15: Anschlagfläche
- 16: Vertiefung

## Patentansprüche

1. Spindelantrieb (1), insbesondere zum motorisch getriebenen Bewegen von Lamellenelementen von Lamellenfenstern oder Lamellenklappen, mit
• einer von einem Antriebsmotor (3) rotierend antreibbaren Gewindespindel (4) und
• einer mit der Gewindespindel (4) in Eingriff stehenden, durch Rotation der Gewindespindel (4) axial entlang der Gewindespindel (4) verlagerbaren Spindelmutter (5),
wobei die Spindelmutter (5) mehrteilig, insbesondere zweiteilig, aufgebaut ist, mit einem ein Innengewinde zum Angreifen an einem Außengewinde der Gewindespindel (4) aufweisenden Schraubmutterteil (6) und einem Lagerteil (7), in dem das Schraubmutterteil (6) gelagert ist und das eine Mitnehmerstruktur (8) zum Übertragen einer von der Gewindespindel (4) auf die Spindelmutter (5) aufgebrachten Antriebskraft auf ein anzutreibendes Element aufweist, wobei das Schraubmutterteil (6) in dem Lagerteil (7) derart gelagert ist, dass es eine Relativbewegung zu dem Lagerteil (7) mit einem Richtungsanteil der Bewegung quer zu einer Gewindelängsachse des Innengewindes ausführen kann,
**gekennzeichnet durch** ein gemeinsames Antriebsgehäuse (2), in dem der Antriebsmotor (3), die Gewindespindel (4) und die Spindelmutter (5) angeordnet sind, wobei das Antriebsgehäuse (2) eine in einer Längsrichtung langgestreckte Form aufweist, wobei die Gewindespindel (4) in Längsrichtung des Antriebsgehäuses (2) verlaufend angeordnet ist,
und durch in dem Antriebsgehäuse (2) ausgebildete Führungsstrukturen, insbesondere Führungsflächen, die mit korrespondierenden Gegenstrukturen an dem Lagerteil (7) der Spindelmutter (5) zusammenwirken, um die Spindelmutter (5) in der Längsrichtung des Antriebsgehäuses (2) zu führen.

2. Spindelantrieb (1) nach Anspruch 1, **dadurch gekennzeichnet, dass** das Schraubmutterteil (6) eine auf einer Außenseite des Schraubmutterteils (6) ausgebildete Lagerfläche aufweist, die wenigstens in einem Abschnitt (13) kugel- oder zylinderabschnittförmig gebildet ist, wobei das Schraubmutterteil (6) in einer in dem Lagerteil (7) ausgebildeten Aufnahme (10) gelagert ist, wobei die Aufnahme (10) eine Aufnahmefläche aufweist, die in wenigstens einem Abschnitt (11) korrespondierend zu dem kugel- oder zylinderabschnittförmig gebildeten Abschnitt (13) der Lagerfläche kugel- oder zylinderabschnittförmig gebildet ist, so dass die jeweils kugel- oder zylinderabschnittförmig gebildeten Abschnitte (11, 13) von Lagerfläche und Aufnahmefläche ein Gelenk bilden.

3. Spindelantrieb (1) nach Anspruch 2, **dadurch gekennzeichnet, dass** der kugel- oder zylinderabschnittförmig gebildete Abschnitt (13) der Lagerfläche an wenigstens einer in Gewindelängsrichtung gesehen axialen Stirnfläche des Schraubmutterteils (6) ausgebildet ist in einem Bereich, der in Richtung der Gewindelängsrichtung axial jenseits des Innengewindes, vor oder hinter dem Innengewinde gelegen ist.

4. Spindelantrieb (1) nach einem der vorhergehenden Ansprüche,
**gekennzeichnet durch** in dem Lagerteil (7) angeordnete axiale Anschläge (12) für das Schraubmutterteil (6).

5. Spindelantrieb (1) nach einem der vorhergehenden Ansprüche,
**gekennzeichnet durch** eine Verdrehsicherung (14, 15, 16) zum Verhindern einer relativen Verdrehung des Schraubmutterteils (6) zu dem Lagerteil (7) um die Gewindelängsachse des Innengewindes.

6. Lamellenfenster oder Lamellenklappe mit in einem gemeinsamen Rahmen um parallele Drehachsen verdrehbar angeordneten Lamellenelementen und einem ein mit den Lamellenelementen zur Umsetzung einer Längsbewegung in Drehbewegungen der Lamellenelement um deren Drehachsen verbundenes Schubelement aufweisenden Antriebsgetriebe, **dadurch gekennzeichnet, dass** das Lamellenfenster oder die Lamellenklappe einen Spindelantrieb (1) nach einem der Ansprüche 1 bis 5 aufweist, der zum Antreiben des Schubelements mit dem Schubelement gekoppelt ist.

## Claims

1. A spindle drive (1), in particular for the motor-driven movement of louvre elements of louvre windows or louvre shutters, having
- a threaded spindle (4) which can be driven in rotation by a drive motor (3) and
- a spindle nut (5) which engages with the threaded spindle (4) and can be displaced axially along the threaded spindle (4) by rotating the threaded spindle (4),
wherein the spindle nut (5) is constructed in several parts, in particular in two parts, with a screw nut part (6) having an internal thread for engaging an external thread of the threaded spindle (4) and a bearing part (7) in which the screw nut part (6) is mounted and which has a driver structure (8) for transmitting a driving force applied by the threaded spindle (4) to the spindle nut (5) to an element to be driven, wherein the screw nut part (6) is mounted in the bearing part (7) in such a way that it can execute a relative movement to the bearing part (7) with a directional portion of the movement transverse to a longitudinal thread axis of the internal thread, **characterised by** a common drive housing (2), in which the drive motor (3), the threaded spindle (4) and the spindle nut (5) are arranged, wherein the drive housing (2) has an elongated shape in a longitudinal direction, wherein the threaded spindle (4) is arranged extending in the longitudinal direction of the drive housing (2), and by guide structures formed in the drive housing (2), in particular guide surfaces, which co-operate with corresponding counter-structures on the bearing part (7) of the spindle nut (5) in order to guide the spindle nut (5) in the longitudinal direction of the drive housing (2).

2. A spindle drive (1) according to claim 1, **characterised in that** the screw nut part (6) has a bearing surface which is formed on an outer side of the screw nut part (6) and which is formed in the shape of a spherical or cylindrical section in at least one section (13), wherein the bearing surface is formed in the shape of a spherical or cylindrical section, whereas the screw nut part (6) is mounted in a receptacle (10) formed in the bearing part (7), wherein the receptacle (10) has a receiving surface which is formed in a spherical or cylindrical section shape in at least one section (11) corresponding to the section (13) of the bearing surface formed in a spherical or cylindrical section shape, so that the sections (11, 13) of the bearing surface and receiving surface formed in a spherical or cylindrical section shape in each case form a joint.

3. A spindle drive (1) according to claim 2, **characterised in that** the spherical or cylindrical section (13) of the bearing surface is formed on at least one axial end face of the screw nut part (6) as viewed in the longitudinal direction of the thread in a region which is located axially beyond the internal thread, in front of or behind the internal thread in the direction of the longitudinal direction of the thread.

4. A spindle drive (1) according to one of the preceding claims, **characterised by** axial stops (12) for the screw nut part (6) arranged in the bearing part (7).

5. A spindle drive (1) according to one of the preceding claims, **characterised by** an anti-rotation device (14, 15, 16) for preventing a relative rotation of the screw nut part (6) to the bearing part (7) about the longitudinal thread axis of the internal thread.

6. A louvre window or louvre flap with louvre elements arranged rotatably about parallel axes of rotation in a common frame and a drive gear having a drive element connected to the louvre elements for converting a longitudinal movement into rotary movements of the louvre element about their axes of rotation, **characterised in that** the louvre window or the louvre flap has a spindle drive (1) according to one of claims 1 to 5, which is coupled to the push element for driving the push element.

## Revendications

1. Entraînement de broche (1), en particulier pour le déplacement motorisé d'éléments de fenêtres à lamelles ou de volets à lamelles, comportant
- une broche filetée (4) qui peut être entraînée en rotation par un moteur d'entraînement (3) et
- un écrou de broche (5) qui s'engage dans la broche filetée (4) et peut être déplacé axialement le long de la broche filetée (4) en faisant tourner la broche filetée (4),
dans lequel l'écrou de broche (5) est construit en plusieurs parties, en particulier en deux parties, avec une partie d'écrou de vis (6) présentant un filetage intérieur pour s'engager dans un filetage extérieur de la broche filetée (4) et une partie de roulement (7) dans laquelle la partie d'écrou de vis (6) est montée et qui possède une structure d'entraînement (8) pour transmettre une force d'entraînement appliquée par la broche filetée (4) à l'écrou de broche (5) à un élément devant être entraîné, dans lequel la partie écrou à vis (6) est montée dans la partie palier (7) pour qu'elle puisse exécuter un mouvement par rapport à la partie palier (7) avec une partie directionnelle du mouvement transversale à un axe de filetage longitudinal du filetage intérieur, **caractérisé par** un boîtier d'entraînement commun (2), dans lequel sont disposés le moteur d'entraînement (3), la broche filetée (4) et l'écrou de broche (5), dans lequel le boîtier d'entraînement (2) est de forme allongée dans une direction longitudinale, dans lequel la broche filetée (4) est disposée en extension dans la direction longitudinale du boîtier d'entraînement (2), et par des structures de guidage formées dans le boîtier d'entraînement (2), en particulier des surfaces de guidage, qui coopèrent avec des contre-structures correspondantes sur la partie d'appui (7) de l'écrou de la broche (5) afin de guider l'écrou de la broche (5) dans la direction longitudinale du boîtier d'entraînement (2).

2. Entraînement de broche (1) selon la revendication 1, **caractérisé en ce que** la partie écrou à vis (6) présente une surface d'appui qui est formée sur un côté extérieur de la partie écrou à vis (6) et dont la section est de forme sphérique ou cylindrique dans au moins une section (13), où la surface d'appui est de section sphérique ou cylindrique, tandis que la partie écrou à vis (6) est montée dans un réceptacle (10) formé dans la partie d'appui (7), dans lequel le logement (10) a une surface de réception qui en forme de section sphérique ou cylindrique dans au moins une section (11) correspondant à la section (13) de la surface d'appui en forme de section sphérique ou cylindrique, de sorte que les sections (11, 13) de la surface d'appui et de la surface de réception en forme de section sphérique ou cylindrique dans chaque cas forment une jointure.

3. Entraînement de broche (1) selon la revendication 2, **caractérisé en ce que** la section sphérique ou cylindrique (13) de la surface d'appui est formée sur au moins une face d'extrémité axiale de la partie écrou de la vis (6) vue dans la direction longitudinale du filetage dans une zone située axialement au-delà du filetage intérieur, devant ou derrière le filetage intérieur dans la direction de la direction longitudinale du filetage.

4. Entraînement de broche (1) selon l'une des revendications précédentes, **caractérisé par** des butées axiales (12) pour la partie écrou à vis (6) disposée dans la partie palier (7).

5. Entraînement de broche (1) selon l'une des revendications précédentes, **caractérisé par** un dispositif anti-rotation (14, 15, 16) pour empêcher une rotation relative de la partie écrou de la vis (6) par rapport à la partie palier (7) autour de l'axe longitudinal du filetage intérieur.

6. Fenêtre à lamelles ou volet à lamelles avec des éléments à lamelles disposés de manière rotative autour d'axes de rotation parallèles dans un cadre commun et un engrenage d'entraînement ayant un élément d'entraînement relié aux éléments à lamelles pour convertir un mouvement longitudinal en mouvements rotatifs de l'élément à lamelles autour de leurs axes de rotation, **caractérisé par le fait que** la fenêtre à lamelles ou le volet à lamelles a un entraînement à broche (1) selon l'une des revendications 1 à 5, qui est couplé à l'élément de poussée pour entraîner l'élément de poussée.
